# EUROPÄISCHE PATENTANMELDUNG

(11) **EP 1 275 299 A1**
(43) Veröffentlichungstag der Anmeldung: **15.01.2003**
(21) Anmeldenummer: 02015783.0
(22) Anmeldetag: 15.07.2002
(51) Int. Cl.: A01K 83/00

(54) **Angelhaken**

(30) Priorität: 14.07.2001 DE 20111745 U
(71) Anmelder: Krätschmar, Marina, 91710 Gunzenhausen (DE)
(72) Erfinder: Krätschmar, Klaus, 91710 Gunzenhausen (DE)
(74) Vertreter: Tergau & Pohl Patentanwälte

(57) **Zusammenfassung**

Bei einem Angelhaken (2) mit einem Befestigungsschaft (4), an den sich endseitig ein Hakenteil (6) anschließt, weist das Hakenteil (6) einen zu einem unteren Hakengrund (12) des Hakenteils (6) geradlinig verlaufenden Hakenschenkel (8) sowie einen sich an den Hakenschenkel (8) anschließenden Hakenbogen (14) mit einer endseitigen Hakenspitze (16) auf.

## Beschreibung

Die Erfindung betrifft einen Angelhaken mit einem Befestigungsschaft, an den sich endseitig in Hakenteil anschließt.

Am Befestigungsschaft wird üblicherweise eine Angelschnur befestigt und das Hakenteil dient als Fanghaken für einen Fisch. Üblicherweise werden beim Angeln am Angelhaken, und zwar insbesondere am Befestigungsschaft, Köder befestigt, beispielsweise künstliche Köderfische. Das Hakenteil ist üblicherweise als ein durchgehender Hakenbogen ausgebildet, der am Befestigungsschaft beginnt. Ein derartiger herkömmlicher Angelhaken ist beispielsweise in der DE 195 13 689 beschrieben.

Durch die Anordnung des Köders im Bereich des Befestigungsschaftes wird in nachteiliger Weise der Öffnungsabstand des Hakenbogens zum Befestigungsschaft verringert, wodurch die Gefahr von Fehlbissen, also die Gefahr, dass ein bereits am Haken befindlicher Fisch wieder abgleitet, erhöht ist.

Der Erfindung liegt die Aufgabe zugrunde, einen Angelhaken mit gegenüber herkömmlichen Angelhaken verbesserten Eigenschaften, insbesondere im Hinblick auf die Gefahr von Fehlbissen, anzugeben.

Die Aufgabe wird gemäß der Erfindung gelöst durch die Merkmale des Patentanspruchs 1. Danach ist vorgesehen, dass sich an den Befestigungsschaft das Hakenteil anschließt, welches zunächst einen geradlinig verlaufenden Hakenschenkel sowie einen sich daran wiederum anschließenden Hakenbogen mit der endseitigen Hakenspitze aufweist. Der Hakenschenkel und der Hakenbogen stoßen an einem unteren Hakengrund des Hakenteils zusammen.

Durch die Kombination des geradlinigen Hakenschenkels mit dem gebogenen Hakenbogen wird in vorteilhafter Weise bei einer insgesamt hohen Stabilität des Angelhakens ein sehr großer Öffnungsabstand, der auch als Gab bezeichnet wird, erreicht. Dadurch ist auch bei der Befestigung eines Köders am Befestigungsschaft ein ausreichend großer Öffnungsabstand zwischen der Hakenspitze und dem Köder am Befestigungsschaft gegeben, so dass die Gefahr von Fehlbissen gering ist.

Gemäß einer bevorzugten Ausgestaltung ist der Hakenbogen sichelartig ausgebildet und die Hakenspitze ist auf den Befestigungsschaft zu gebogen. Dadurch wird also ein Überlapp gebildet, so dass die Hakenspitze eine Art Hintergriff bildet, was die Gefahr von Fehlbissen zusätzlich verringert. Gleichzeitig weist der Angelhaken auf der Höhe des äußersten Bogenabschnitts des Hakenbogens den größten Seitenabstand zwischen dem Befestigungsschaft und dem Hakenbogen auf. Durch das Zusammenspiel dieses Bereichs mit dem größten Seitenabstand und dem einen Hintergriff bildenden Überlapp der Hakenspitze ist zum einen ein sehr großer Aufnahmeraum für den Fisch gebildet und zugleich ist durch die Ausbildung des Hintergriffs ein Abgleiten des Fisches weitgehend vermieden.

Vorzugsweise liegt der Überlapp zwischen der Hakenspitze und dem äußersten Bogenabschnitt im Bereich zwischen 10 und 30% und insbesondere bei etwa 20% der seitlichen Ausdehnung des Hakenbogens. Die seitliche Ausdehnung ist bestimmt durch den Abstand zwischen einer gedachten vertikalen Linie durch den Hakengrund und dem äußersten Bogenabschnitt des Hakenbogens. Dieser Bereich hat sich als besonders vorteilhaft herausgestellt, um einerseits einen ausreichenden Öffnungsabstand zwischen Hakenspitze und Befestigungsschaft zu gewährleisten und andererseits einen möglichst großen Hintergriff für einen sicheren Halt des Fisches zu gewähren.

Vorzugsweise überstreicht der Hakenbogen einen Bereich zwischen 40% und 60% und insbesondere einen Bereich von 50% des Seitenabstands zwischen dem äußersten Bogenabschnitt und dem Befestigungsschaft. Der verbleibende Seitenabstand wird durch den geradlinigen Hakenschenkel überstrichen. Der Seitenabstand wird also insbesondere hälftig vom Hakenschenkel und vom Hakenbogen überstrichen. Dadurch ist bei sehr hoher Gesamtstabilität des Angelhakens eine günstige Aufteilung erreicht und gleichzeitig die Gefahr von Fehlbissen gering gehalten.

Zweckdienlicherweise ist die Hakenspitze oberhalb der Übergangsstelle zwischen dem Hakenschenkel und dem Befestigungsschaft angeordnet. Die Übergangsstelle ist dabei bevorzugt unterhalb des halben Höhenabstands zwischen der Hakenspitze und dem Hakengrund und insbesondere im Bereich des halben Höhenabstands und einem Drittel Höhenabstand angeordnet. Durch diese Maßnahme ist sichergestellt, dass im Bereich der Hakenspitze ein möglichst großer Öffnungsabstand eingestellt ist, da dieser gebildet ist durch den Abstand zwischen der Hakenspitze und dem Befestigungsschaft und nicht etwa durch den Abstand zu dem schräg verlaufenden Hakenschenkel.

Zweckdienlicherweise ist der Hakengrund gerundet, also ohne Knickstelle ausgebildet, so dass der Angelhaken möglichst widerstandsfrei auch mit dem geradlinigen Hakenschenkel in den Fisch eindringen kann, damit dieser möglichst fest am Angelhaken gehalten ist.

Weitere bevorzugte Ausgestaltungen sind in den Unteransprüchen niedergelegt.

Ausführungsbeispiele der Erfindung werden im Folgenden anhand der Zeichnung näher erläutert. Es zeigen jeweils in schematischen Darstellungen:
- Fig. 1 bis 3: unterschiedliche Ausführungsvarianten eines als Einzelhaken ausgebildeten Angelhakens,
- Fig. 3 bis 6: unterschiedliche Ausführungsformen von als Mehrlingshaken ausgebildete Angelhaken.

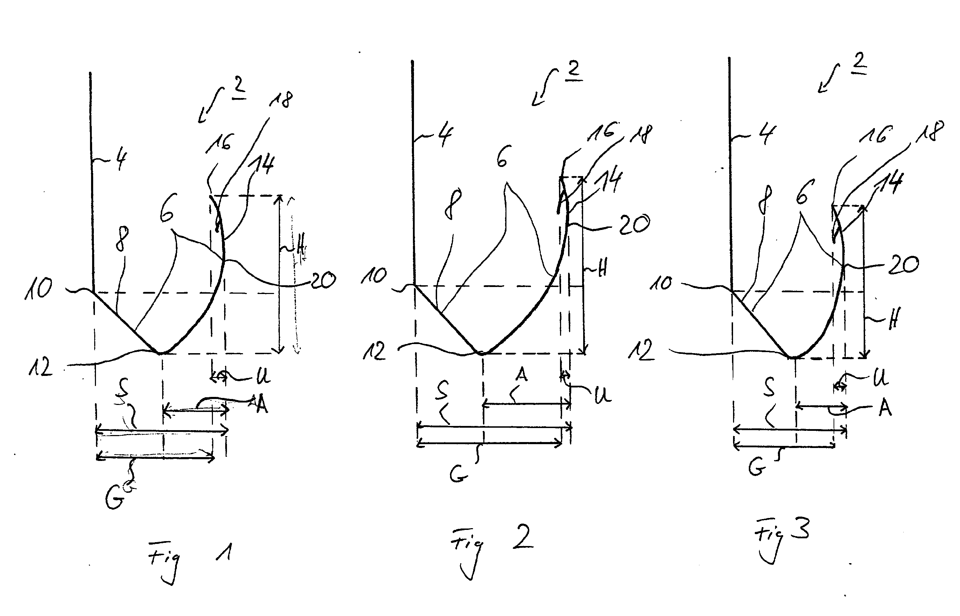

Bei dem als Einzelhaken ausgeführten Angelhaken 2 gemäß den Fig. 1 bis 3 schließt sich endseitig an einem Befestigungsschaft 4 ein Hakenteil 6 an. Dieses Hakenteil 6 umfasst einen geradlinig verlaufenden Hakenschenkel 8, der sich an einer Übergangsstelle 10 an den Befestigungsschaft 4 anschließt und zu einem gerundeten Hakengrund 12 erstreckt. Der Hakengrund 12 bildet den untersten Punkt des Angelhakens 2. Vom Hakengrund 12 aus erstreckt sich ein sichelartig ausgebildeter Hakenbogen 14 nach oben, der endseitig eine Hakenspitze 16 aufweist. Der Hakenbogen 14 kann daher auch als Sichelbogen bezeichnet werden. Etwas unterhalb der Hakenspitze 16 ist ein Widerhaken 18 angeformt. Durch die sichelbogenartige Ausgestaltung hat der Hakenbogen 14 einen äußersten Bogenabschnitt 20, der dadurch definiert ist, dass er den maximalen Seitenabstand S aufweist.

Der Abstand zwischen dem Befestigungsschaft 4 und der Hakenspitze 16 definiert den Öffnungsabstand G, der auch als Gab bezeichnet wird. Der Abstand zwischen einer gedachten vertikalen Linie durch den Hakengrund 12 und dem äußersten Bogenabschnitt 20 definiert die seitliche Ausdehnung A des Hakenbogens 14. Durch die sichelartige Ausbildung des Hakenbogens 14 ist ein Überlapp U gebildet, der definiert ist durch den Abstand zwischen zwei gedachten vertikalen Linien durch die Hakenspitze 16 und dem äußersten Bogenabschnitt 20. Weiterhin definiert der Abstand zwischen einer gedachten horizontalen Linie durch den Hakengrund 12 an der untersten Stelle des Angelhakens 2 und der Hakenspitze 16 einen Höhenabstand H.

Durch die Kombination des geradlinig verlaufenden Hakenschenkels 8 mit dem sichelartig ausgeformten Hakenbogen 14 ist es möglich, einen großen Öffnungsabstand G einzustellen, so dass selbst bei einer Befestigung eines Köders am Befestigungsschaft 4 noch ein ausreichender Öffnungsabstand G verbleibt. Zusätzlich wird durch die sichelartige Ausgestaltung unterhalb der Hakenspitze 16, und zwar im Bereich des maximalen Seitenabstands S ein sehr großer Aufnahmebereich für den Fisch ausgebildet. Durch diesen großen Seitenabstand S und den großen Öffnungsabstand G wird der Fisch sicher am Angelhaken 2 gehalten.

Diese Wirkung wird verstärkt durch den Überlapp U, der nach Art eines Hintergriffs wirkt und ein Heruntergleiten des Fisches vom Hakenbogen 14 verhindert. Der Fisch wird zusätzlich durch den Widerhaken 18 gehalten.

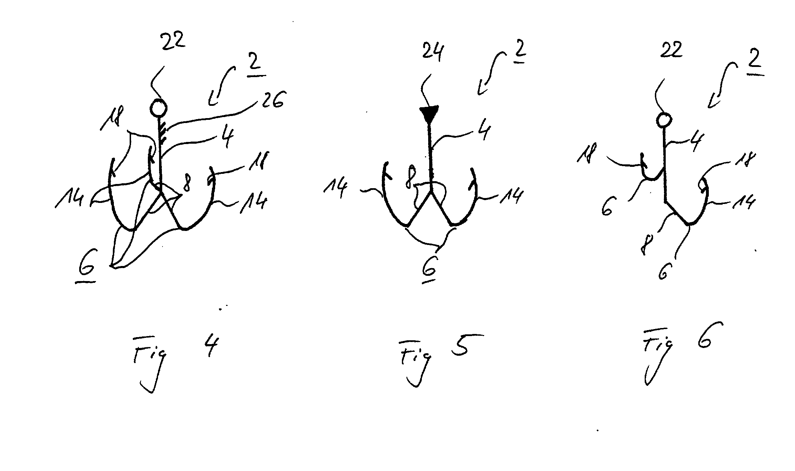

Durch die Kombination des geradlinig verlaufenden Hakenschenkels 8 mit dem sichelartigen Hakenbogen 14 wird insgesamt die Gefahr eines Fehlbisses gering gehalten. Als besonders vorteilhaft hat sich hierbei herausgestellt, wenn der Überlapp U im Bereich zwischen 10 und 30% der seitlichen Ausdehnung A liegt. Vorzugsweise beträgt der Überlapp dabei 20% der seitlichen Ausdehnung A. In den Fig. 1 bis 3 ist ein Überlapp von etwa 20% (Fig. 1), 10% (Fig. 2) und 30% (Fig. 3) der jeweiligen seitlichen Ausdehnung A dargestellt.

Weiterhin hat sich als vorteilhaft herausgestellt, wenn der Hakenbogen 14 einen Bereich zwischen 40 und 60% des Seitenabstands überdeckt, wenn also die seitliche Ausdehnung A einen Bereich zwischen 40 und 60% des maximalen Seitenabstands S überdeckt. Insbesondere wird dabei eine symmetrische Aufteilung bevorzugt, wie sie gemäß Fig. 1 dargestellt ist und wonach sowohl der geradlinige Hakenschenkel 8 als auch der sichelartige Hakenbogen 14 jeweils etwa die Hälfte des maximalen Seitenabstands S überdeckt. Nach Fig. 2 überdeckt der Hakenbogen 14 etwa 60% und nach Fig. 3 etwa 40% des maximalen Seitenabstands S.

Als dritte Maßnahme, die sich auf einen möglichst sicheren Halt des Fisches positiv auswirkt, ist die Anordnung der Übergangsstelle 10 bedeutend, die vorzugsweise unterhalb des halben Höhenabstands H, und zwar im Bereich zwischen dem halben Höhenabstand H und einem Drittel Höhenabstand H, angeordnet ist. Damit wird insbesondere erreicht, dass sowohl der Öffnungsabstand G als auch der maximale Seitenabstand S oberhalb der Übergangsstelle 10 angeordnet ist. Eine Verjüngung des Aufnahmeraums zwischen dem Befestigungsschaft 4 bzw. dem Hakenschenkel 8 und dem Hakenbogen 14 findet also lediglich im unteren Bereich des Angelhakens 2 statt. Der maximale Aufnahmeraum und insbesondere der Öffnungsabstand G ist durch die schräge Ausgestaltung des geradlinigen Hakenschenkels 8 nicht beeinträchtigt.

Gemäß den Fig. 3 bis 6 ist das Hakenteil 6 auch bei Mehrlingshaken angeordnet, beispielsweise bei einem Drillingshaken gemäß Fig. 4, bei einem symmetrischen Zwillingshaken gemäß Fig. 5 oder einem asymmetrischen Zwillingshaken gemäß Fig. 6. Nach den Fig. 4 und 5 weisen alle einzelnen Hakenteile 6 jeweils den geradlinigen Hakenschenkel 8 und den sich daran anschließenden sichelartigen Hakenbogen 14 auf. Alternativ hierzu kann es vorgesehen sein, wie es beispielsweise in der Fig. 6 angedeutet ist, dass eines der Hakenteile herkömmlich ausgebildet ist.

In der Regel ist am vom Hakenteil 6 abgewandten Ende des Befestigungsschaftes 4 ein Öhr 22, ein Plättchen 24 oder auch eine eingegossene Bleikugel (nicht dargestellt) angeordnet. An diesem vom Hakenteil 6 abgewandten Ende des Befestigungsschafts 4 ist in der Regel die Hakenschnur befestigt.

Weiterhin sind nach dem Ausführungsbeispiel der Fig. 4 am Befestigungsschaft drei weitere Widerhaken 26 angeordnet, die beispielsweise für die sichere Befestigung eines Köderfisches dienen.

### Bezugszeichenliste

- 2: Angelhaken
- 4: Befestigungsschaft
- 6: Hakenteil
- 8: geradliniger Hakenschenkel
- 10: Übergangsstelle
- 12: Hakengrund
- 14: sichelartiger Hakenbogen
- 16: Hakenspitze
- 18: Widerhaken
- 20: äußerster Bogenabschnitt
- 22: Öhr
- 24: Plättchen
- 26: weiterer Widerhaken

- S: maximaler Seitenabstand
- G: Öffnungsabstand
- A: seitliche Ausdehnung
- H: Höhenabstand
- U: Überlapp

## Patentansprüche

1. Angelhaken (2) mit einem Befestigungsschaft (4), an den sich endseitig ein Hakenteil (6) anschließt,
**dadurch gekennzeichnet,**
**dass** das Hakenteil (6) einen zu einem unteren Hakengrund (12) des Hakenteils (6) geradlinig verlaufenden Hakenschenkel (8) sowie einen sich an den Hakenschenkel (8) anschließenden Hakenbogen (14) mit einer endseitigen Hakenspitze (16) aufweist.

2. Angelhaken (2) nach Anspruch 1,
**dadurch gekennzeichnet,**
**dass** der Hakenbogen (12) sichelartig ausgebildet und die Hakenspitze (16) auf den Befestigungsschaft (4) zu gebogen ist.

3. Angelhaken (2) nach Anspruch 2,
**dadurch gekennzeichnet,**
**dass** durch die sichelartige Ausbildung des Hakenbogens (14) ein Überlapp (U) zwischen der Hakenspitze (16) und dem äußersten Bogenabschnitt (20) des Hakenbogens (14) gebildet ist, der zwischen 10 % und 30% und insbesondere 20% der seitlichen Ausdehnung (A) des Hakenbogens (14) überdeckt, wobei die seitliche Ausdehnung (A) bestimmt ist durch den Abstand zwischen einer gedachten Linie durch den Hakengrund (12) und dem äußersten Bogenabschnitt (20) des Hakenbogens (14).

4. Angelhaken (2) nach einem der vorhergehenden Ansprüche,
**dadurch gekennzeichnet,**
**dass** der Hakenbogen (14) einen Bereich zwischen 40 % und 60% und insbesondere einen Bereich von 50% des Seitenabstands (S) zwischen dem äußersten Bogenabschnitt (20) des Hakenbogens (14) und dem Befestigungsschaft (4) überstreicht.

5. Angelhaken (2) nach einem der vorhergehenden Ansprüche,
**dadurch gekennzeichnet,**
**dass** sich die Hakenspitze (16) oberhalb der Übergangsstelle (10) befindet, an der sich der Hakenschenkel (8) an den Befestigungsschaft (4) anschließt.

6. Angelhaken (2) nach Anspruch 5,
**dadurch gekennzeichnet,**
**dass** die Übergangsstelle (10) unterhalb des halben Höhenabstands (H) zwischen der Hakenspitze (16) und dem Hakengrund (12), insbesondere im Bereich zwischen dem halben Höhenabstand (H) und einem Drittel Höhenabstand (H), angeordnet ist.

7. Angelhaken (2) nach einem der vorhergehenden Ansprüche,
**dadurch gekennzeichnet,**
**dass** der Hakengrund (12) gerundet ausgebildet ist.

8. Angelhaken (2) nach einem der vorhergehenden Ansprüche,
**dadurch gekennzeichnet,**
**dass** am Hakenbogen (14) ein Widerhaken (18) angeordnet ist.

9. Angelhaken (2) nach einem der vorhergehenden Ansprüche,
**dadurch gekennzeichnet,**
**dass** am Befestigungsschaft (4) ein weiterer Widerhaken (26) angeordnet ist.

10. Angelhaken (2) nach einem der vorhergehenden Ansprüche,
**dadurch gekennzeichnet,**
**dass** am Befestigungsschaft (4) mehrere Hakenteile (6) angeordnet sind, so dass ein Mehrlingshaken gebildet ist.
